# EUROPÄISCHE PATENTSCHRIFT

(11) **EP 3 816 170 B1**
(45) Veröffentlichungstag und Bekanntmachung des Hinweises auf die Patenterteilung: **26.04.2023**
(21) Anmeldenummer: 20203780.0
(22) Anmeldetag: 26.10.2020
(51) Int. Cl.: C07F 9/14, C07F 9/24

(54) **VERFAHREN ZUR HERSTELLUNG VON PHOSPHORSÄUREARYLESTERDIAMIDEN**
METHOD FOR THE PREPARATION OF PHOSPHORIC ACID ARYL ESTER DIAMIDES
PROCÉDÉ DE FABRICATION D'ARYLESTER-DIAMIDES D'ACIDE PHOSPHORIQUE

(30) Priorität: 29.10.2019 DE 102019216652
(43) Veröffentlichungstag der Anmeldung: 05.05.2021
(73) Patentinhaber: SKW STICKSTOFFWERKE PIESTERITZ GmbH, 06886 Lutherstadt Wittenberg (DE)
(72) Erfinder: Hucke, André, 06889 Wittenberg (DE); Radics, Ute, 06901 Kemberg (DE); Schuster, Carola, 06886 Wittenberg (DE)
(74) Vertreter: Grünecker Patent- und Rechtsanwälte PartG mbB

(56) Entgegenhaltungen:
- CN-A- 106 810 575
- DD-A1- 128 315
- DE-A1-102011 015 104
- HERMANN J ROTH ET AL: "Synthesis of phenyl phosphorodiamidates. I", ARCHIV DER PHARMAZIE, WILEY VERLAG, WEINHEIM, Bd. 314, Nr. 1, 1. Januar 1981 (1981-01-01), Seiten 85-93, XP008183191, ISSN: 0365-6233, DOI: 10.1002/ARDP.19813140116 [gefunden am 2006-09-23]

## Beschreibung

Die vorliegende Erfindung betrifft ein technisch einfaches Verfahren zur Herstellung von Phosphorsäurearylesterdiamiden ausgehend von Phosphoroxychlorid und Phenolen, wobei die als Zwischenprodukt entstehenden Phosphorsäurearylesterdichloride ohne zusätzlichen Reinigungsschritt mit Ammoniak zum Endprodukt umgesetzt werden. Außerdem betrifft das Verfahren verschiedene Varianten der Umsetzung von Phosphorsäurearylesterdichloriden mit Ammoniak.

### Stand der Technik

Harnstoff kann durch das Enzym Urease in Ammoniak und Kohlendioxid gespalten werden. Die Reaktion verläuft außerordentlich schnell und ist für Stickstoffverluste in Form von Ammoniak bei der Anwendung harnstoffbasierter Düngemittel sowie für die Ammoniakemissionen aus Tierställen verantwortlich. Der Einsatz von Ureaseinhibitoren ist eine effektive Möglichkeit, die enzymatische Harnstoff-Hydrolyse deutlich zu verlangsamen und so Harnstoff und harnstoffhaltige Dünger für leichte Bodenstandorte verlustfrei zur Anwendung zu bringen. Gleichermaßen können die beträchtlichen Ammoniakemissionen bei der Tierhaltung deutlich vermindert werden.

Phosphorsäurearylesterdiamide sind seit längerer Zeit als effektive Inhibitoren des Enzyms Urease bekannt (DD 122177).

Die Synthese der Phosphorsäurearylesterdiamide erfolgt im Allgemeinen durch Umsetzung von Phosphoroxychlorid mit Phenolen, wobei zunächst die entsprechenden Phosphorsäurearylesterdichloride entstehen. Deren nachfolgende Ammonolyse führt dann zu den Phosphorsäurearylesterdiamiden.

Die Reaktion zwischen Phosphoroxychlorid und Phenol ist wenig selektiv, so dass auch höher substituierte Produkte, vornehmlich die Diarylester (Bisprodukte), gebildet werden. Zur Unterdrückung der Nebenproduktbildung wird deshalb mit einem größeren Überschuss an Phosphoroxychlorid gearbeitet, was die Raum-Zeit-Ausbeute verschlechtert. So offenbart DD 134104 ein Molverhältnis an Phosphoroxychorid und Phenol von vorzugsweise 3 : 1. Außerdem muss für eine ökonomische Synthese die im Überschuss eingesetzte Phosphoroxychloridmenge destillativ zurückgewonnen und wiederverwendet werden. Weitere Maßnahmen zur Unterdrückung von Nebenreaktionen sind die Zudosierung von Phenol zum Phosphoroxychlorid und die Einhaltung bestimmter Aufheiz- und Temperaturprofile wie z. B. in DE 2200137 und DD 134104 offenbart.

Trotzdem lässt sich durch die genannten Maßnahmen die Bildung von Nebenprodukten nicht gänzlich vermeiden, so dass zusätzlich zur destillativen Rückgewinnung von Phosphoroxychlorid auch eine Destillation der rohen Phosphorsäurearylesterdichloride erforderlich ist, da sich die Bisprodukte nach der Ammonolyse von den gewünschten Phosphorsäurearylesterdiamiden nicht oder nur mit erheblichem Aufwand abtrennen lassen. Während die Destillation von Phosphoroxychlorid auch bei Normaldruck erfolgen kann, ist zur Abtrennung der Phosphorsäurearylesterdichloride von den höhersiedenden Nebenprodukten ein niedriges Vakuum im Bereich von 10 mbar und darunter erforderlich, was technisch aufwändig ist und zusätzlich zu den zuvor genannten Maßnahmen zur Vermeidung von Nebenprodukten sich negativ auf die Herstellungskosten der Phosphorsäurearylesterdichloride auswirkt.

Da die Reaktion zwischen Phenolen und Phosphoroxychlorid relativ langsam verläuft, werden zur Beschleunigung Katalysatoren eingesetzt.

In der Literatur sind eine Reihe unterschiedlicher Katalysatoren publiziert worden. So ist seit längerer Zeit die katalytische Wirkung verschiedener Metallchloride wie z. B. NaCl, ZnCl₂ oder Aluminiumchlorid bekannt (vgl. Zhurnal ObshcheiKhimii 26, 3060 (1956) sowie J. Am. Chem. Soc. 80, 727 (1958)). Calcium- oder Magnesiumoxid, die mit dem während der Reaktion entstehendem Chlorwasserstoff die entsprechenden Chloride bilden, haben den gleichen Effekt (DD 134104).

Neben der Katalyse durch Metallsalze ist auch die katalytische Wirkung von Amiden, Phosphoramiden sowie Harnstoffderivaten bekannt (DE 2200089). DE 2200137 offenbart den Einsatz verschiedener Amine als Katalysator. Auch Carbamate oder Ammoniumsalze sind katalytisch wirksam (DE 2230912, DE 2230913). In JP 05132491 und JP 08176164 werden quaternäre Ammonium- und Phosphoniumsalze als Katalysator vorgeschlagen.

Die zuvor genannten Katalysatoren des Standes der Technik haben den Nachteil, dass sie sowohl die gewünschte Bildung der Phosphorsäurearylesterdichloride als auch die Bildung von Nebenprodukten, vornehmlich der Phosphorsäurediarylesterchloride gleichermaßen katalysieren.

Eine selektivere Katalyse bewirken Trialkyl- oder Triphenylphosphine oder die entsprechenden Phosphinoxide, wodurch mit einem geringeren Überschuss an Phosphoroxychlorid gearbeitet werden kann (DE 10 2011 015 104).

Die im ersten Syntheseschritt erzeugten Phosphorsäurearylesterdichloride werden im nächsten Syntheseschritt mit Ammoniak zu Phosphorsäurearylesterdiamiden umgesetzt. Dieser Schritt wird im Folgenden als Ammonolyse bezeichnet. Im einfachsten Fall wird dabei Ammoniakgas in die Lösung der Phosphorsäurearylesterdichloride eingeleitet (vgl. J. Agric Food Chem. 56, 3721 (2008)). Dabei treten jedoch aufgrund von Ammoniakunterschuss Nebenreaktionen unter Bildung oligomerer Produkte auf, die zu Lasten der Ausbeute an Phosphorsäurearylesterdiamiden gehen.

Zur Ammonolyse der Phosphorsäurearylesterdichloride wird in DD 128315, DD 142714 und DD 130936 das Verdüsen derselben mit flüssigem Ammoniak und Ammoniakgas vorgeschlagen. Zur Verdüsung muss entweder zusätzlich mit einem Inertgas oder mit einem erheblichen Ammoniaküberschuss gearbeitet arbeitet werden. Problematisch ist dabei die Abführung der in kurzer Zeit freiwerdenden Reaktionswärme. Außerdem können bei lokalen Überhitzungen Nebenreaktionen auftreten. Weiterhin entstehen beim Verdüsen der flüssigen und gasförmigen Komponenten die Feststoffe Phosphorsäurearylesterdiamid und Ammoniumchlorid, was zum Verstopfen der Düse führen kann.

Eine einfache und kostengünstige Ammonolysevariante ist die Verwendung von Ammoniakwasser, allerdings können hier die Phosphorsäurearylesterdichloride hydrolysieren, weshalb zur Minimierung der Hydrolyse bei Temperaturen unterhalb von 0 °C gearbeitet wird (Arch. Pharm. 314, 85 (1981)). Das setzt bei technischen Ansatzgrößen jedoch leistungsfähige Kühlaggregate voraus, was die Herstellungskosten erhöht. Gleichermaßen sind die hergestellten Phosphorsäurearylesterdiamide nicht hydrolysestabil und werden bei erniedrigten oder erhöhten pH-Werten wie in Ammoniakwasser besonders schnell abgebaut.

CN 106 810 575 beschreibt ein Verfahren zum Herstellen von Diphenylphosphorylchlorid.

Günstiger ist die Ammonolyse unter Verwendung von flüssigem Ammoniak. Die Reaktion muss dann zwar in Druckreaktoren erfolgen, jedoch ist der notwendige Druck relativ gering, so dass die technischen Anforderungen nicht sehr hoch sind. Problematischer ist viel mehr, dass sich bei der Ammonolyse durch ausfallendes Produkt und Ammoniumchlorid Verkrustungen an Rührer und Reaktorwand bilden können.

In ungünstigen Fällen können diese Anbackungen erhebliche Ausmaße erreichen und die anschließende Entnahme der Reaktionsmischung aus dem Ammonolysereaktor stark erschweren. Darüber hinaus wird die Produktqualität wie z. B. Reinheit und PartikelgrößenVerteilung negativ beeinflusst. Zudem verringern diese Anbackungen die Effizienz des Wärmeübergangs aus dem Reaktionsraum in den Kühlmantel, was eine Verschlechterung der Reaktionskontrolle sowie eine Erhöhung des Energiebedarfs der Kühlung des stark exothermen Ammonolyseschrittes bedeutet. Solche Anbackungen müssen also durch eine geeignete Reaktionsführung unbedingt vermieden werden.

Die genannten Herstellungsmöglichkeiten des Standes der Technik lassen eine technisch einfache Herstellung von Phosphorsäurearylesterdiamiden in hohen Ausbeuten bei gleichzeitig geringen Kosten nicht zu.

### Gegenstand der Erfindung

Der vorliegenden Erfindung liegt daher die Aufgabe zugrunde, ein besonders einfaches Verfahren zur Herstellung von Phosphorsäurearylesterdiamiden bereitzustellen, welches die Nachteile der Verfahren des Standes der Technik nicht aufweist und nach dem die Phosphorsäurearylesterdiamide kostengünstig in hohen Ausbeuten im technischen Maßstab hergestellt werden können.

### Beschreibung der Erfindung

Diese Aufgabe wurde erfindungsgemäß dadurch gelöst, dass zur Herstellung von Phosphorsäurearylesterdiamiden der allgemeinen Formel (I), 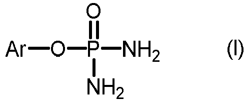
in der Ar Phenyl bedeutet und der Phenylrest unabhängig voneinander durch eine oder mehrere C₁-C₄-Alkyl-, C₁-C₄-Alkoxy-, Halogen-, Hydroxy oder Nitrogruppen substituiert sein kann,
in einem ersten Schritt Phosphoroxychlorid und Phenol oder ein durch eine oder mehrere C₁-C₄-Alkyl-, C₁-C₄-Alkoxy-, Halogen-, Hydroxy oder Nitrogruppen substituiertes Phenol in Anwesenheit mindestens eines Phosphins und/oder eines Phosphinoxids als Katalysator in Abwesenheit eines Lösungsmittels zu einem Phosphorsäurearylesterdichlorid der allgemeinen Formel (II) umgesetzt wird, 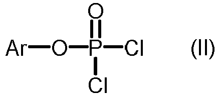
welches anschließend in einem zweiten Reaktionsschritt, nach Abtrennung des überschüssigen Phosphoroxychlorids durch Destillation bei Normaldruck oder bei leichtem Vakuum von 100 bis 500 mbar, ohne weitere Reinigung in einem inerten Lösungsmittel mit Ammoniak zum Phosphorsäurearylesterdiamid der allgemeinen Formel (I) umgesetzt wird, wobei der Katalysator in einer phenolbezogenen Menge von 0,1 mol-% bis 5 mol-% eingesetzt wird, das Molverhältnis Phenol : Phosphoroxychlorid zwischen 1 : 1 und 1 : 4 liegt und das inerte Lösungsmittel ausgewählt ist aus der Gruppe bestehend aus aliphatischen und aromatischen Kohlenwasserstoffen und Halogenkohlenwasserstoffen oder aprotisch polaren Lösungsmitteln.

Es hat sich nämlich überraschenderweise gezeigt, dass ein Phosphin oder ein Phosphinoxid nicht nur effektive Katalysatoren für die Herstellung von Phosphorsäurearylesterdichloriden aus Phenolen und Phosphoroxychlorid (POCl₃) sind. Die Katalyse erfolgt im Vergleich zu den Katalysatoren des Standes der Technik so selektiv und in hohen Ausbeuten, dass selbst bei einem niedrigen Überschuss an Phosphoroxychlorid nur in geringem Maße ausbeutemindernde Nebenreaktionen, vornehmlich die Bildung der Diarylester, erfolgen. Dies ermöglicht, bei Akzeptanz einer geringen Menge der Diarylester (Bisprodukt) im Endprodukt, auf die technisch aufwändige Vakuumdestillation zur Reinigung der Phosphorsäurearylesterdichloride vor deren Ammonolyse gänzlich zu verzichten.

In einer bevorzugten Ausführungsform in Kombination mit einer der oben oder unten genannten Ausführungsformen ist das Phosphin und/oder Phosphinoxid ausgewählt aus der Gruppe bestehend aus Triphenylphosphin, Trimethyl-, Triethyl-, Tripropyl, Tributylphosphin oder -phosphinoxid sowie Triphenylphosphinoxid, besonders bevorzugt Triphenylphosphin.

Der Gehalt an Bisprodukt im Phosphorsäurearylesterdiamid liegt bei Verwendung von Triphenylphosphin als Katalysator und bei gleichzeitigem Verzicht auf die Abtrennung der Phosphorsäurearylesterdichloride vom Reaktionsgemisch durch Vakuumdestillation, schon bei einem nur 50%igen Überschuss an Phosphoroxychlorid (Molverhältnis Phenol : Phosphoroxychlorid = 1 : 1,5) bei nur 3 %. Mit einem Katalysator des Standes der Technik, wie zum Beispiel Magnesiumoxid, ist hingegen für einen vergleichbaren Bisproduktgehalt die doppelte Menge an Phosphoroxychlorid notwendig (Molverhältnis Phenol : Phosphoroxychlorid = 1 : 3; siehe Beispiel 2).

Neben der technischen Vereinfachung des Herstellungsverfahrens durch Verzicht auf die Vakuumdestillation der rohen Phosphorsäurearylesterdichloride, ist auch die Raum-Zeit-Ausbeute bei Verwendung des Katalysators des erfindungsgemäßen Verfahrens, z. B. Triphenylphosphin, wesentlich erhöht, da mit einem deutlich geringeren Überschuss an Phosphoroxychlorid gearbeitet werden kann.

Natürlich kann auch bei Verwendung jeden anderen Katalysators des Standes der Technik auf die destillative Reinigung der rohen Phosphorsäurearylesterdichloride verzichtet werden, jedoch sind dann die Bisproduktgehalte deutlich höher oder es muss ein größerer Überschuss an Phosphoroxychlorid verwendet werden, was wiederum die Raum-Zeit-Ausbeute wesentlich verschlechtert.

Die Phosphorsäurearylesterdichloride werden hergestellt, indem Phosphoroxychlorid und Phenol oder substituiertes Phenol sowie der Katalysator, wie Triphenylphosphin, in einem Reaktor vorgelegt und auf Reaktionstemperatur erwärmt werden.

Das erfindungsgemäße Verfahren ist dadurch gekennzeichnet, dass der Katalysator in einer phenolbezogenen Menge von vorzugsweise 0,2 bis 1 mol-% eingesetzt wird und dass das Molverhältnis Phenol : Phosphoroxychlorid vorzugsweise zwischen 1 : 1,1 und 1 : 2 liegt. Die Reaktionstemperatur zur Umsetzung von Phosphoroxychlorid mit Phenol liegt zwischen 100 und 180 °C, vorzugsweise zwischen 120 und 150 °C.

Die Reihenfolge der Zugabe der einzelnen Komponenten in den Reaktor spielt keine Rolle. Zweckmäßigerweise wird Phosphoroxychlorid vorgelegt und nach Zugabe von Phenol und Katalysator auf Reaktionstemperatur erhitzt. Selbstverständlich kann Phenol auch in fester Form über eine entsprechende Feststoffdosiereinrichtung, als Schmelze oder als Lösung in Phosphoroxychlorid zudosiert werden.

Die Reaktion lässt sich anhand der HCl-Entwicklung verfolgen. Die Reaktionsdauer hängt vom Mengenverhältnis Phenol und Phosphoroxychlorid sowie der eingestellten Reaktionstemperatur ab. Bei einem Molverhältnis Phenol : Phosphoroxychlorid von 1 : 1,5 und Erhitzen unter Rückfluss ist die Reaktion nach maximal drei Stunden beendet.

Eine sukzessive Zugabe des Phenols zum Phosphoroxychlorid zur Ausbeutesteigerung ist ebenso wie die Einhaltung bestimmter Temperaturprofile oder eines bestimmten Aufheizregimes beim erfindungsgemäßen Verfahren unnötig. Das erfindungsgemäße Verfahren zeichnet sich damit durch seine besondere Einfachheit aus, da die einzelnen Komponenten nur zusammengegeben und auf Reaktionstemperatur erhitzt werden müssen.

Nach Reaktionsende wird das überschüssige Phosphoroxychlorid durch Destillation bei Normaldruck oder bei leichtem Vakuum im Bereich von 100 - 500 mbar abdestilliert. Dabei bleibt das Phosphorsäurearylesterdichlorid im Gemisch mit Nebenprodukten und Katalysator zurück. In einer bevorzugten Ausführungsform des erfindungsgemäßen Verfahrens in Kombination mit einer der oben oder unten genannten Ausführungsformen wird dieses Gemisch ohne weitere Reinigung anschließend mit Ammoniak zum Phosphorsäurearylesterdiamid umgesetzt.

Das abdestillierte Phosphoroxychlorid kann für die nächste Reaktion verwendet werden. Zur weiteren Vereinfachung des Verfahrens kann das Phosphoroxychlorid auch ganz oder teilweise im Reaktionsgemisch verbleiben. Bei der anschließenden Umsetzung mit Ammoniak reagiert dieses zu wasserlöslichem Triamidophosphat, welches zusammen mit dem Ammoniumchlorid durch Waschen mit Wasser vom Phosphorsäurearylesterdiamid abgetrennt werden kann.

Das erfindungsgemäße Verfahren umfasst außerdem in einem zweiten Schritt die Umsetzung der im ersten Schritt aus Phenolen und Phosphoroxychlorid hergestellten Phosphorsäurearylesterdichloride mit Ammoniak zu Phosphorsäurearylesterdiamiden. Die Reaktionsbedingungen der Ammonolyse sind dabei so gewählt, dass die Phosphorsäurearylesterdiamide einerseits in hoher Ausbeute und mit einem niedrigen Gehalt an Verunreinigungen entstehen und andererseits bei der Ammonolyse keine Anbackungen oder Verklumpungen aus dem Zielprodukt und dem Nebenprodukt Ammoniumchlorid auftreten. Die Phosphorsäurearylesterdiamide besitzen eine definierte Korngrößenverteilung, die günstig für die weitere Verarbeitung der Produkte ist.

Es hat sich überraschenderweise gezeigt, dass die Phosphorsäurearylesterdiamide entsprechend den nachfolgend aufgeführten verschiedenen, technisch einfach und kostengünstig zu realisierenden Verfahren, in vergleichbar hoher Ausbeute und Reinheit hergestellt werden können. Überraschenderweise treten bei den erfindungsgemäßen Reaktionsbedingungen keinerlei Anbackungen oder Verkrustungen durch bei der Ammonolyse ausfallendes Phosphorsäurearylesterdiamid sowie Ammoniumchlorid auf.

Zur besseren Aufnahme der bei Ammonolyse freiwerdenden Reaktionswärme und zur besseren Rührbarkeit des Reaktionsgemisches sowie zur Gewährleistung eines gleichbleibenden Kornspektrums der Phosphorsäurearylesterdiamide hat es sich als günstig erwiesen, die Ammonolyse mit einer Lösung der Phosphorsäurearylesterdichloride in einem inerten Lösungsmittel durchzuführen.

Aufgrund seines entsprechenden Siedepunktes, der guten Lösungseigenschaften sowie der leichten und kostengünstigen Verfügbarkeit hat sich die Verwendung von Toluol als inertes Lösungsmittel als vorteilhaft erwiesen. Natürlich kann auch jedes andere inerte Lösungsmittel bei der Ammonolyse eingesetzt werden.

Unter einem inerten Lösungsmittel ist ein Lösungsmittel zu verstehen, welches die Ausbeute und Produktqualität nicht negativ beeinflusst. Geeignet sind Lösungsmittel, deren Siedepunkt bei Normaldruck zwischen 50 und 150°C liegt. Besonders geeignet sind Lösungsmittel, deren Siedepunkt bei Normaldruck 80°C bis 120°beträgt. Inerte Lösungsmittel sind z. B. aliphatische und aromatische Kohlenwasserstoffe bzw. Halogenkohlenwasserstoffe wie Heptan, Cyclohexan, Toluol, Xylol, Chloroform oder Chlorbenzol oder auch aprotisch polare Lösungsmittel wie Essigsäureethylester oder Kohlensäureester.

Die Menge des Lösungsmittels ist nicht entscheidend und wird so gewählt, dass eine gute Rührbarkeit des Reaktionsgemisches gewährleistet ist und die Exothermie bei der Ammonolyse beherrschbar bleibt. In einer bevorzugten Ausführungsform in Kombination mit einer der oben oder unten genannten Ausführungsformen wird im erfindungsgemäßen Verfahren eine Lösungsmittelmenge zwischen 200 und 1000 ml pro Mol Phosphorsäurearylesterdichlorid, besonders bevorzugt 300 bis 800 ml pro Mol Phosphorsäurearylesterdichlorid, insbesondere 400 bis 700 ml Phosphorsäurearylesterdichlorid verwendet.

Die Ammonolyse kann beim erfindungsgemäßen Verfahren in einem weiten Temperaturbereich von -50 bis 50 °C durchgeführt werden, was günstig für die bereitzustellende Kühlleistung ist. Vorzugsweise erfolgt die Ammonolyse bei einer Reaktorinnentemperatur oberhalb des Gefrierpunktes bei 0 bis 30 °C. Einerseits ist hier eine gute Ausbeute und Produktqualität gewährleistet, andererseits kann als Kühlmedium normales Brauchwasser eingesetzt werden.

In einer bevorzugten Ausführungsform in Kombination mit einer der oben oder unten genannten Ausführungsformen werden zur Umsetzung von 1 mol des Phosphorsäurearylesterdichlorids beim erfindungsgemäßen Verfahren 4 bis 10, besonders bevorzugt 4 bis 6 mol Ammoniak verwendet. Zur Sicherstellung einer vollständigen Reaktion ist die Verwendung eines gewissen Ammoniaküberschusses sinnvoll und sogar von Vorteil, da aufgrund der guten Löslichkeit von Ammoniumchlorid in Ammoniak der Bildung von ammoniumchloridhaltigen Anbackungen entgegengewirkt werden kann. Der Ammoniaküberschuss kann am Ende der Reaktion vorteilhaft zur Bereitung einer ammoniakalischen Absorberlösung für die Gaswäsche bei der Herstellung des Phosphorsäurearylesterdichlorids eingesetzt werden.

In einer bevorzugten Ausführungsform in Kombination mit einer der oben oder unten genannten Ausführungsformen wird eine Lösung des Phosphorsäurearylesterdichlorids (II) im inerten Lösungsmittel, besonders bevorzugt eine toluolische Lösung, zu flüssigem Ammoniak dosiert.

In einer weiteren bevorzugten Ausführungsform in Kombination mit einer der oben oder unten genannten Ausführungsformen wird eine Lösung des Phosphorsäurearylesterdichlorids (II) im inerten Lösungsmittel, besonders bevorzugt eine toluolische Lösung, zu einer wässrigen Ammoniaklösung dosiert, wobei der Prozess der Dosierung der Dichloridlösung als auch die Isolierung des aus dem Reaktionsgemisch ausfallenden Rohproduktes innerhalb von 2 bis 7 Stunden, besonders bevorzugt 3 bis 6 Stunden, insbesondere fünf Stunden erfolgt.

In einer weiteren bevorzugten Ausführungsform in Kombination mit einer der oben oder unten genannten Ausführungsformen wird eine Lösung des Phosphorsäurearylesterdichlorids (II) im inerten Lösungsmittel, besonders bevorzugt eine toluolische Lösung, zu einer wässrigen Ammoniaklösung bei einer Temperatur von mindestens 0°C, besonders bevorzugt 0°C bis 30°C, insbesondere 10°C bis 25°C dosiert.

Es hat sich nämlich überraschenderweise gezeigt, dass in diesem Zeitraum selbst bei Reaktionstemperaturen deutlich oberhalb von 0°C einerseits keine ausbeutemindernde Nebenreaktion durch Hydrolyse des Phosphorsäurearylesterdichlorids erfolgt und dass andererseits keine nennenswerte ammoniakkatalysierte Hydrolyse des Phosphorsäurearylesterdiamids erfolgt. Im Gegensatz zum Stand der Technik kann deshalb auf aufwändige und kostenintensive Maßnahmen zur Einhaltung von Reaktionstemperaturen unterhalb 0°C verzichtet werden.

In einer bevorzugten Ausführungsform in Kombination mit einer der oben oder unten genannten Ausführungsformen wird im erfindungsgemäßen Verfahren eine konzentrierte wässrige Ammoniaklösung mit einem Ammoniakgehalt von mindestens 10 Gew.-%, besonders bevorzugt mindestens 20 Gew.-%, insbesondere mindestens 30 Gew.-%, bezogen auf die Gesamtlösung verwendet.

In einer anderen bevorzugten Ausführungsform in Kombination mit einer der oben oder unten genannten Ausführungsformen wird eine Lösung des Phosphorsäurearylesterdichlorids (II) im inerten Lösungsmittel, besonders bevorzugt eine toluolische Lösung, zu ammoniakgesättigtem Toluol dosiert, durch das gleichzeitig ein Ammoniakstrom geleitet wird, wobei der Ammoniakstrom so bemessen ist, dass mindestens 4 mol Ammoniak pro Mol Phosphorsäurearylesterdichlorid (II), besonders bevorzugt mindestens 5 mol, insbesondere mindestens 6 mol den Reaktor durchströmen. Liegt also beispielsweise die eingestellte Dosiergeschwindigkeit des Phosphorsäurearylesterdichlorids bei 1 mol pro Stunde, wird der Ammoniakstrom auf mindestens 4 mol pro Stunde eingestellt.

In einer weiteren bevorzugten Ausführungsform in Kombination mit einer der oben oder unten genannten Ausführungsformen werden die Dosiergeschwindigkeit der Lösung des Phosphorsäurearylesterdichlorids sowie die Kühlleistung bei den erfindungsgemäßen Ammonolysevarianten so gewählt, dass die Reaktorinnentemperatur 30°C nicht überschreitet. Die Dosierung kann entweder mit konstanter Dosierrate oder temperaturgesteuert erfolgen.

Beim Zutropfen der Lösung des Phosphorsäurearylesterdichlorids im inerten Lösungsmittel zum Ammoniak oder zur wässrigen oder toluolischen Ammoniaklösung können sich an der Öffnung des Dosierrohres durch unerwünschte Reaktion mit in der Gasphase befindlichem Ammoniak Verfestigungen oder gar eine Verstopfung bestehend aus Phosphorsäurearylesterdiamid und Ammoniumchlorid bilden. Dies begünstigt unerwünschte Nebenreaktionen, die die Reinheit des Phosphorsäurearylesterdiamids verringern. In einer weiteren bevorzugten Ausführungsform des erfindungsgemäßen Verfahrens in Kombination mit einer der oben oder unten genannten Ausführungsformen wird deshalb die toluolische Lösung des Phosphorsäurearylesterdichlorids über ein Tauchrohr direkt in das Ammoniak oder die Ammoniaklösung hineindosiert.

Als Rührer eignen sich besonders Schrägblatt und Ankerrührer. Natürlich sind auch andere Rührer geeignet, wenn dadurch eine effiziente Durchmischung und Wärmeabfuhr gewährleistet wird. In einer bevorzugten Ausführungsform in Kombination mit einer der oben oder unten genannten Ausführungsformen wird der Rührer mit einer Drehzahl im Bereich von 100 bis 1500 min⁻¹, besonders bevorzugt 200 bis 1000 min⁻¹, insbesondere 400 bis 600 min⁻¹ betrieben. Wird in diesem Drehzahlbereich gearbeitet, findet eine effektive Durchmischung statt und ein Verspritzen des Reaktionsgemisches und damit die Ausbildung von Anbackungen aus Phosphorsäurearylesterdiamid und Ammoniumchlorid wird vermieden.

In einer bevorzugten Ausführungsform in Kombination mit einer der oben oder unten genannten Ausführungsformen wird nach beendeter Ammonolyse auf Raumtemperatur erwärmt und noch vorhandener Überschussammoniak innerhalb von 15 bis 30 min durch Entspannung ausgetrieben. In einer weiteren bevorzugten Ausführungsform in Kombination mit einer der oben oder unten genannten Ausführungsformen wird das ausgefallene Rohprodukt bestehend aus Phosphorsäurearylesterdiamid und Ammoniumchlorid danach von der Mutterlauge abgetrennt. Die Abtrennung kann durch Filtration, z. B. mit einem Rührwerksfiltertrockner oder mittels einer Zentrifuge erfolgen. Soll das ammoniumchloridhaltige Rohprodukt weiterverwendet werden, schließt sich eine Trocknung an. Ein weitgehend ammoniumchloridfreies Produkt mit einem maximalen Chloridgehalt von 5 Gew.-%, bezogen auf das Produkt, kann durch Wäsche des Rohproduktes mit Wasser erhalten werden. Dabei wird mindestens so viel Wasser eingesetzt, wie zur Erzeugung einer gesättigten Ammoniumchloridlösung benötigt wird. Optimal ist die Verwendung von 2 bis 4 Liter Wasser pro Kilogramm Endprodukt. Zur Verbesserung der Wascheffizienz kann die Wassermenge auf zwei oder mehrere Wäschen verteilt werden.

Nach der Wäsche kann in einer bevorzugten Ausführungsform in Kombination mit einer der oben oder unten genannten Ausführungsformen das Produkt bei Temperaturen bis zu 100°C getrocknet werden, wobei zur Beschleunigung des Trocknungsprozesses im Vakuum gearbeitet werden kann.

In einer weiteren bevorzugten Ausführungsform des erfindungsgemäßen Verfahrens in Kombination mit einer der oben oder unten genannten Ausführungsformen wird das bei der Ammonolyse für das Phosphorsäurearylesterdichlorid verwendete inerte Lösungsmittel, vorzugsweise Toluol, am Ende der Reaktion zurückgewonnen und ohne Aufreinigung, z. B. durch Destillation, für die nächste Ammonolysereaktion als Lösungsmittel für das Phosphorsäurearylesterdichlorid wiederverwendet.

Es hat sich nämlich überraschenderweise gezeigt, dass im Zuge der Ammonolyse nur sehr geringe Mengen löslicher Nebenprodukte entstehen, so dass bei Wiederverwendung des inerten Lösungsmittels, vorzugsweise des Toluols, ohne dessen Aufreinigung die Produktqualität nicht negativ beeinflusst wird (siehe Beispiel 6).

Vor Wiederverwendung des inerten Lösungsmittels, vorzugsweise des Toluols, wurde lediglich der enthaltene Restammoniak durch Anlegen eines leichten Vakuums im Bereich von 100 bis 400 mbar ausgetrieben und Verlustlösungsmittel durch frisches ergänzt. Aus Lösungsmittel-Wasser-Gemischen, vorzugsweise Toluol-Wasser-Gemischen, wurde das Lösungsmittel durch Phasentrennung abgetrennt und zur nächsten Wiederverwendung nicht getrocknet. Das Lösungsmittel kann auf diese Weise für mindestens zehn weitere Ammonolysen wiederverwendet werden, jedoch mindestens so lange, wie sich die Reinheit des hergestellten Phosphorsäurearylesterdiamids nicht verändert.

### Beispiele

Die vorliegende Erfindung wird anhand der folgenden Beispiele näher erläutert.

### Beispiel 1: Herstellung von Phosphorsäurephenylesterdichlorid

In einem Rührgefäß wird eine Mischung von Phosphoroxychlorid (115 g; 0,75 mol) und Phenol (47,1 g; 0,5 mol) sowie 1 g Triphenylphosphin als Katalysator vorgelegt und anschließend bis zum Ende der HCl-Entwicklung zum Sieden erhitzt. Die Absorption und Neutralisation des entstehenden HCl-Gases erfolgt in Natronlauge oder Ammoniakwasser.

Nach beendeter Reaktion wird der Überschuss an Phosphoroxychlorid bei Normaldruck oder im leichten Vakuum (50 - 100 mbar) abdestilliert. Das rohe Phosphorsäurephenylesterdichlorid wird ohne weitere Reinigung entsprechend den Beispielen 3 - 5 mit Ammoniak umgesetzt.

### Beispiel 2: Diarylestergehalte im Phosphorsäurearylesterdiamid bei Verwendung der Katalysatoren Magnesiumoxid und Triphenylphosphin

Die nachfolgende Tabelle zeigt anhand der Umsetzung von Phenol mit unterschiedlichen Mengen an Phosphoroxychlorid, dass bei der Herstellung eines Phosphorsäurearylesterdichlorids entsprechend Beispiel 1, also mit dem Katalysator Triphenylphosphin (PPh₃) und ohne Aufarbeitung des Phosphorsäurearylesterdichlorids, im daraus hergestellten Phosphorsäurearylesterdiamid deutlich geringere Diarylestergehalte (Bisprodukt) resultieren als bei Verwendung des Katalysators Magnesiumoxid (MgO).

| **Molverhältnis Phenol : POCl₃** | **Bisprodukt Kat. MgO** | **Bisprodukt Kat. PPh₃** |
|---|---|---|
| 1 : 1 | | 12,9 % |
| 1 : 1,1 | 16,0% | 7,3 % |
| 1 : 1,5 | 8,7 % | 3,1 % |
| 1 : 1,75 | 7,1 % | 1,9 % |
| 1 : 2 | 6,0 % | 1,6 % |
| 1 : 3 | 3,1 % | |
| 1 : 4 | 2,2 % | 0,7 % |
| 1 : 5 | 1,4 % | |

### Beispiel 3: Ammonolyse mit verflüssigtem Ammoniak

In einen 600 ml-Edelstahl-Autoklav mit Kühlmantel wird Ammoniak (3 mol, 51 g) vorgelegt und auf 10 °C temperiert. Zur Ammonolyse wird das rohe Phosphorsäurearylesterdichlorid aus Beispiel 1 in 220 ml Toluol gelöst und die toluolische Lösung unter Rühren über ein in den Ammoniak reichendes Tauchrohr in den Reaktor gepumpt. Der Volumenstrom der Dichloridlösung sowie die Kühlmanteltemperatur wird so gewählt, dass die Temperatur im Reaktorinnenraum 30 °C nicht übersteigt (Beispiel: Volumenstrom: 10 ml/min, Kühlmanteltemperatur: 10 °C). Nach erfolgter Dosierung wird der Reaktor auf Normaldruck entspannt. Das ammoniumchloridhaltige Rohprodukt wird abfiltriert und zur Entfernung des Ammoniumchlorids zweimal mit 200 bzw. 100 ml Wasser gewaschen. Das gewaschene Endprodukt wird im Vakuum bei 60°C getrocknet. Man erhält Phosphorsäurephenylesterdiamid bezogen auf eingesetztes Phenol in einer Bruttoausbeute von 85,7 % (Reinheit mind. 95 %).

### Beispiel 4: Ammonolyse mit Ammoniakwasser

In einen 600 ml-Edelstahl-Rührreaktor mit Kühlmantel werden 300 ml 32 Gew.-%iges Ammoniakwasser vorgelegt und auf 10 °C temperiert. Zur Ammonolyse wird das rohe Phosphorsäurephenylesterdichlorid aus Beispiel 1 in 220 ml Toluol gelöst und die toluolische Lösung unter Rühren über ein in das Ammoniakwasser reichendes Tauchrohr in den Reaktor gepumpt. Der Volumenstrom der Dichloridlösung sowie die Kühlmanteltemperatur wird so gewählt, dass die Temperatur im Reaktorinnenraum 30 °C nicht übersteigt (Beispiel: Volumenstrom: 10 ml/min, Kühlmanteltemperatur: 10 °C). Unmittelbar im Anschluss an die Dosierung wird das noch Ammoniumchlorid enthaltene Rohprodukt abfiltriert und zur Entfernung des Ammoniumchlorids zweimal mit je 100 ml Wasser gewaschen. Das gewaschene Endprodukt wird im Vakuum bei 60°C getrocknet. Man erhält Phosphorsäurephenylesterdiamid bezogen auf eingesetztes Phenol in einer Bruttoausbeute von 83,2 % (Reinheit mind. 95 %).

### Beispiel 5: Ammonolyse mit Ammoniakgas

In einem 600 ml-Edelstahl-Rührreaktor mit Kühlmantel werden 100 ml Toluol auf 10 °C temperiert und durch Einleiten von Ammoniakgas mit Ammoniak gesättigt. Zur Ammonolyse wird das rohe Phosphorsäurephenylesterdichlorid aus Beispiel 1 in 220 ml Toluol gelöst und die toluolische Lösung unter Rühren über ein in das Toluol reichende Tauchrohr unter gleichzeitigem Einleiten von Ammoniakgas in den Reaktor gepumpt. Der Volumenstrom der Dichloridlösung sowie die Kühlmanteltemperatur wird so gewählt, dass die Temperatur im Reaktorinnenraum 30 °C nicht übersteigt (Beispiel: Volumenstrom: 10 ml/min, Kühlmanteltemperatur: 10 °C). Der Volumenstrom des Ammoniakgases ist so zu bemessen, dass bezogen auf den Volumenstrom der Dichloridlösung stets ein Überschuss Ammoniakgas den Reaktor passiert. Nach erfolgter Dosierung wird noch weitere 15 min Ammoniak eingeleitet. Das ammoniumchloridhaltige Rohprodukt wird abfiltriert und zur Entfernung des Ammoniumchlorids zweimal mit 200 bzw. 100 ml Wasser gewaschen. Das gewaschene Endprodukt wird im Vakuum bei 60°C getrocknet. Man erhält Phosphorsäurephenylesterdiamid bezogen auf eingesetztes Phenol in einer Bruttoausbeute von 85 % (Reinheit mind. 95 %).

### Beispiel 6: Wiederverwendung der toluolischen Mutterlauge bei der Ammonolyse

Dieses Beispiel demonstriert am Beispiel der Ammonolyse von Phosphorsäurephenylesterdichlorid zu Phosphorsäurephenylesterdiamid die Wiederverwendung der nach der Ammonolyse entsprechend den Beispielen 3 - 5 anfallenden toluolischen Mutterlauge als Lösungsmittel für den nachfolgenden Ammolyseversuch, ohne deren vorheriger Aufarbeitung durch Destillation. Dazu wurde das durch Filtration im Vorversuch zurückgewonnene Toluol erneut als Lösungsmittel für das Phosphorsäurephenylesterdichlorids des nächsten Ansatzes verwendet. Zuvor wurde lediglich der enthaltene Restammoniak durch Anlegen eines leichten Vakuums im Bereich von 100 bis 400 mbar ausgetrieben und Verlusttoluol durch frisches ergänzt. Es erfolgten fünf Ammonolyseversuche entsprechend Beispiel 3 und weitere fünf Ammonolyseversuche entsprechend Beispiel 4. Aus Toluol-Wasser-Gemischen wurde das Toluol durch Phasentrennung abgetrennt und zur nächsten Wiederverwendung nicht getrocknet.

Insgesamt erfolgten zehn Ammonolyseversuche. Die toluolische Mutterlauge aus einem ersten Ammonolyseversuch wurde also insgesamt zehnmal wiederverwendet. Die Ergebnisse in der nachfolgenden Tabelle zeigen, dass dabei weder die Ausbeute an Phosphorsäurephenylesterdiamid noch dessen Reinheit negativ beeinflusst wird.

| **Anzahl Wiederverwendungen Toluol** | **Ausbeute an Phosphorsäure-phenylesterdiamid (bezogen auf Dichlorid)** | **Reinheit des Phosphorsäurephenylesterdiamids** |
|---|---|---|
| Ammonolyse mit verflüssigtem Ammoniak entsprechend Beispiel 3: | | |
| Wiederverwendung 1 | 93,4 % | > 95 % |
| Wiederverwendung 2 | 94,6 % | > 95 % |
| Wiederverwendung 3 | 94,8 % | > 95 % |
| Wiederverwendung 4 | 96,9 % | > 95 % |
| Wiederverwendung 5 | 96,4 % | > 95 % |
| Ammonolyse mit Ammoniakwasser entsprechend Beispiel 4: | | |
| Wiederverwendung 6 | 92,2 % | > 95 % |
| Wiederverwendung 7 | 92,4 % | > 95 % |
| Wiederverwendung 8 | 93,6 % | > 95 % |
| Wiederverwendung 9 | 91,9 % | > 95 % |
| Wiederverwendung 10 | 91,9 % | > 95 % |

## Patentansprüche

1. Verfahren zur Herstellung von Phosphorsäurearylesterdiamiden der allgemeinen Formel (I), 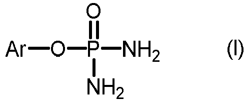
in der Ar Phenyl bedeutet und der Phenylrest unabhängig voneinander durch eine oder mehrere C₁-C₄-Alkyl-, C₁-C₄-Alkoxy-, Halogen-, Hydroxy oder Nitrogruppen substituiert sein kann,
**dadurch gekennzeichnet, dass** in einem ersten Schritt Phosphoroxychlorid und Phenol oder ein durch eine oder mehrere C₁-C₄-Alkyl-, C₁-C₄-Alkoxy-, Halogen-, Hydroxy oder Nitrogruppen substituiertes Phenol in Anwesenheit mindestens eines Phosphins und/oder eines Phosphinoxids als Katalysator in Abwesenheit eines Lösungsmittels zu einem Phosphorsäurearylesterdichlorid der allgemeinen Formel (II) umgesetzt wird, 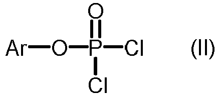
welches anschließend in einem zweiten Reaktionsschritt, nach Abtrennung des überschüssigen Phosphoroxychlorids durch Destillation bei Normaldruck oder bei leichtem Vakuum von 100 bis 500 mbar, ohne weitere Reinigung in einem inerten Lösungsmittel mit Ammoniak zum Phosphorsäurearylesterdiamid der allgemeinen Formel (I) umgesetzt wird, wobei der Katalysator in einer phenolbezogenen Menge von 0,1 mol-% bis 5 mol-% eingesetzt wird,
das Molverhältnis Phenol : Phosphoroxychlorid zwischen 1 : 1 und 1 : 4 liegt und
das inerte Lösungsmittel ausgewählt ist aus der Gruppe bestehend aus aliphatischen und aromatischen Kohlenwasserstoffen und Halogenkohlenwasserstoffen oder aprotisch polaren Lösungsmitteln.

2. Verfahren nach Anspruch 1, **dadurch gekennzeichnet, dass** der Katalysator ausgewählt ist aus der Gruppe bestehend aus Triphenylphosphin, Trimethylphosphin, Triethylphoshin, Tripropylphosphin, Tributylphosphin, Triphenylphosphinoxid, Trimethylphosphinoxid, Triethylphoshinoxid, Tripropylphosphinoxid und Tributylphosphinoxid, vorzugsweise Triphenylphosphin.

3. Verfahren nach Anspruch 1 oder 2, **dadurch gekennzeichnet, dass** der Katalysator in einer phenolbezogenen Menge von 0,2 bis 1 mol-% eingesetzt wird.

4. Verfahren nach einem der Ansprüche 1 bis 3, **dadurch gekennzeichnet, dass** das Molverhältnis Phenol : Phosphoroxychlorid zwischen 1 : 1,1 und 1 : 2 liegt.

5. Verfahren nach einem der Ansprüche 1 bis 4, **dadurch gekennzeichnet, dass** die Reaktionstemperatur bei der Umsetzung von Phosphoroxychlorid mit Phenol zwischen 100 und 180 °C, vorzugsweise zwischen 120 und 150 °C liegt.

6. Verfahren nach einem der Ansprüche 1 - 5, **dadurch gekennzeichnet, dass** im zweiten Reaktionsschritt die Umsetzung mit Ammoniak bei einer Reaktorinnentemperatur von -50 bis 50 °C, vorzugsweise von 0 bis 30 °C erfolgt, wobei zur Umsetzung von 1 mol des Phosphorsäurearylesterdichlorids (II) 4 bis 8 mol Ammoniak eingesetzt werden.

7. Verfahren nach einem der Ansprüche 1 bis 6, **dadurch gekennzeichnet, dass** die Lösung des Phosphorsäurearylesterdichlorids (II) in dem inerten Lösungsmittel zu flüssigem Ammoniak dosiert wird.

8. Verfahren nach einem der Ansprüche 1 bis 6, **dadurch gekennzeichnet, dass** die Lösung des Phosphorsäurearylesterdichlorids (II) in dem inerten Lösungsmittel zu einer wässrigen Ammoniaklösung mit einem Ammoniakgehalt von mindestens 20 Gew.-%, bezogen auf die Gesamtklösung, dosiert wird.

9. Verfahren nach Anspruch 8, **dadurch gekennzeichnet, dass** nach der Dosierung des Phosphorsäurearylesterdichlorids (II) das Rohprodukt aus Phosphorsäurearylesterdiamid und Ammoniumchlorid von der Reaktionslösung abgetrennt wird, wobei die Dosierung des Phosphorsäurearylesterdichlorids (II) einschließlich der Abtrennung des Rohproduktes innerhalb von fünf Stunden erfolgt.

10. Verfahren nach einem der Ansprüche 1 bis 6, **dadurch gekennzeichnet, dass** die Lösung des Phosphorsäurearylesterdichlorids (II) in dem inerten Lösungsmittel zu ammoniakgesättigtem inerten Lösungsmittel dosiert wird, durch das gleichzeitig ein Ammoniakstrom geleitet wird, wobei der Ammoniakstrom so bemessen ist, dass mindestens 4 mol Ammoniak pro Mol Phosphorsäurearylesterdichlorid (II) den Reaktor durchströmen.

11. Verfahren nach einem der Ansprüche 6 bis 10, **dadurch gekennzeichnet, dass** die Lösung des Phosphorsäurearylesterdichlorids (II) in dem inerten Lösungsmittel über ein Tauchrohr direkt in das Ammoniak oder die Ammoniaklösung dosiert wird.

12. Verfahren nach einem der Ansprüche 7 bis 10, **dadurch gekennzeichnet, dass** die Dosiergeschwindigkeit der Lösung sowie die Kühlleistung so gewählt sind, dass die Reaktorinnentemperatur 30 °C nicht überschreitet.

13. Verfahren nach einem der Ansprüche 1 - 12, **dadurch gekennzeichnet, dass** das inerte Lösungsmittel nach der Umsetzung des Phosphorsäurearylesterdichlorids mit Ammoniak zurückgewonnen wird und nach Austreiben von gelöstem Restammoniak ohne weitere Aufarbeitung erneut verwendet wird.

14. Verfahren nach einem der Ansprüche 1 bis 13, wobei das inerte Lösungsmittel ausgewählt ist aus der Gruppe bestehend aus Toluol, Heptan, Cyclohexan, Xylol, Trichlormethan, Chlorbenzol, Essigsäureethylester und Kohlensäureester und Gemischen davon, vorzugsweise Toluol.

## Claims

1. Method for the preparation of phosphoric acid aryl ester diamides of the general formula (I), 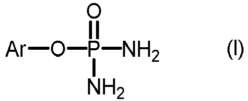
wherein Ar is phenyl and the phenyl radical can be substituted independently of one another by one or more C₁-C₄-alkyl, C₁-C₄-alkoxy, halogen, hydroxyl or nitro groups,
**characterized in that**, in a first step, phosphorus oxychloride and phenol or a phenol substituted by one or more C₁-C₄-alkyl, C₁-C₄-alkoxy, halogen, hydroxyl or nitro groups are reacted in the presence of at least one phosphine and/or of a phosphine oxide as catalyst in the absence of a solvent to give a phosphoric acid aryl ester dichloride of the general formula (II) 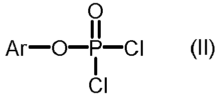
which is subsequently reacted in a second reaction step, after removal of the excess phosphorus oxychloride by distillation at normal pressure or at a slight vacuum of 100 to 500 mbar, without further purification in an inert solvent with ammonia to give the phosphoric acid aryl ester diamide of the general formula (I),
wherein the catalyst is used in a phenol-related amount of from 0.1 mol% to 5 mol%,
the molar ratio phenol: phosphorus oxychloride is between 1 : 1 and 1 : 4 and
the inert solvent is selected from the group consisting of aliphatic and aromatic hydrocarbons and halohydrocarbons or aprotic polar solvents.

2. Method according to claim 1, **characterized in that** the catalyst is selected from the group consisting of triphenylphosphine, trimethylphosphine, triethylphoshine, tripropylphosphine, tributylphosphine, triphenylphosphine oxide, trimethylphosphine oxide, triethylphoshine oxide, tripropylphosphine oxide and tributylphosphine oxide, preferably triphenylphosphine.

3. Method according to claim 1 or 2, **characterized in that** the catalyst is used in a phenol-related amount of 0.2 to 1 mol%.

4. Method according to any one of claims 1 to 3, **characterized in that** the molar ratio phenol: phosphorus oxychloride is between 1 : 1.1 and 1 : 2.

5. Method according to any one of claims 1 to 4, **characterized in that** the reaction temperature during the reaction of phosphorus oxychloride with phenol is between 100 and 180°C, preferably between 120 and 150°C.

6. Method according to any one of claims 1 to 5, **characterized in that**, in the second reaction step, the reaction with ammonia is carried out at an internal reactor temperature of from -50 to 50°C, preferably from 0 to 30°C, wherein 4 to 8 moles of ammonia are used to react 1 mole of the phosphoric acid aryl ester dichloride (II).

7. Method according to any one of claims 1 to 6, **characterized in that** the solution of the phosphoric acid aryl ester dichloride (II) in the inert solvent is metered to liquid ammonia.

8. Method according to any one of claims 1 to 6, **characterized in that** the solution of the phosphoric acid aryl ester dichloride (II) in the inert solvent is metered to an aqueous ammonia solution having an ammonia content of at least 20% by weight, based on the total solution.

9. Method according to claim 8, **characterized in that**, after the metering of the phosphoric acid aryl ester dichloride (II), the crude product of phosphoric acid aryl ester diamide and ammonium chloride is separated from the reaction solution, wherein the metering of the phosphoric acid aryl ester dichloride (II), including the separation of the crude product, is carried out within five hours.

10. Method according to any one of claims 1 to 6, **characterized in that** the solution of the phosphoric acid aryl ester dichloride (II) in the inert solvent is metered to ammonia-saturated inert solvent through which an ammonia stream is simultaneously passed, wherein the ammonia stream is such that at least 4 moles of ammonia per mole of phosphoric acid aryl ester dichloride (II) flow through the reactor.

11. Method according to any one of claims 6 to 10, **characterized in that** the solution of the phosphoric acid aryl ester dichloride (II) in the inert solvent is metered directly into the ammonia or the ammonia solution via an immersion tube.

12. Method according to any one of claims 7 to 10, **characterized in that** the dosing speed of the solution and the cooling capacity are selected such that the internal reactor temperature does not exceed 30°C.

13. Method according to one of claims 1 to 12, **characterized in that** the inert solvent is recovered after the reaction of the phosphoric acid aryl ester dichloride with ammonia and is reused without further work-up after driving off dissolved residual ammonia.

14. Method according to any one of claims 1 to 13, wherein the inert solvent is selected from the group consisting of toluene, heptane, cyclohexane, xylene, trichloromethane, chlorobenzene, ethyl acetate and carbonic acid ester and mixtures thereof, preferably toluene.

## Revendications

1. Procédé de fabrication d'arylesterdiamides d'acide phosphorique de formule générale (I), 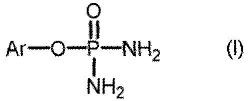
dans lequel Ar représente un phényle et le radical phényle peut être substitué indépendamment par un ou plusieurs groupes alkyle en C₁-C₄, alcoxy en C₁-C₄, halogène, hydroxy ou nitro,
**caractérisé en ce que**, dans une première étape, de l'oxychlorure de phosphore et du phénol ou un phénol substitué par un ou plusieurs groupes alkyle en C₁-C₄, alcoxy en C₁-C₄, halogène, hydroxy ou nitro sont convertis en un dichlorure d'arylesterdiamide d'acide phosphorique de formule générale (II) en présence d'au moins une phosphine et/ou un oxyde de phosphine en tant que catalyseur en l'absence d'un solvant, 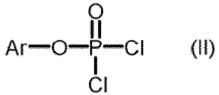
qui est ensuite mis à réagir dans une seconde étape de réaction, après séparation de l'oxychlorure de phosphore en excès par distillation à pression normale ou sous un léger vide de 100 à 500 mbars, sans purification supplémentaire dans un solvant inerte avec de l'ammoniac pour former de l'arylesterdiamide d'acide phosphorique de formule générale (I), le catalyseur étant utilisé en une quantité liée au phénol de 0,1 % en mole à 5 % en mole,
le rapport molaire phénol:oxychlorure de phosphore étant compris entre 1:1 et 1:4, et le solvant inerte est choisi dans le groupe constitué par des hydrocarbures aliphatiques et aromatiques et des hydrocarbures halogénés ou des solvants aprotiques polaires.

2. Procédé selon la revendication 1, **caractérisé en ce que** le catalyseur est choisi dans le groupe constitué par la triphénylphosphine, la triméthylphosphine, la triéthylphosphine, la tripropylphosphine, la tributylphosphine, l'oxyde de triphénylphosphine, l'oxyde de triméthylphosphine, l'oxyde de triéthylphosphine, l'oxyde de tripropylphosphine et l'oxyde de tributylphosphine, de préférence la triphénylphosphine.

3. Procédé selon la revendication 1 ou 2, **caractérisé en ce que** le catalyseur est utilisé en une quantité liée au phénol de 0,2 à 1 % en mole.

4. Procédé selon l'une quelconque des revendications 1 à 3, **caractérisé en ce que** le rapport molaire phénol:oxychlorure de phosphore est compris entre 1:1,1 et 1:2.

5. Procédé selon l'une quelconque des revendications 1 à 4, **caractérisé en ce que** la température de réaction lors de la réaction de l'oxychlorure de phosphore avec le phénol est comprise entre 100 et 180°C, de préférence entre 120 et 150°C.

6. Procédé selon l'une quelconque des revendications 1 à 5, **caractérisé en ce que** dans la seconde étape de réaction, la réaction avec l'ammoniac est effectuée à une température interne du réacteur de -50 à 50°C, de préférence de 0 à 30°C, de 4 à 8 moles d'ammoniac étant utilisées pour la réaction de 1 mole du dichlorure d'arylester d'acide phosphorique (II).

7. Procédé selon l'une quelconque des revendications 1 à 6, **caractérisé en ce que** la solution du dichlorure d'arylester d'acide phosphorique (II) dans le solvant inerte est dosée dans de l'ammoniac liquide.

8. Procédé selon l'une quelconque des revendications 1 à 6, **caractérisé en ce que** la solution du dichlorure d'arylester d'acide phosphorique (II) dans le solvant inerte est dosée dans une solution aqueuse d'ammoniac présentant une teneur en ammoniac d'au moins 20 % en poids par rapport à la solution totale.

9. Procédé selon la revendication 8, **caractérisé en ce qu'**après le dosage du dichlorure d'arylester d'acide phosphorique (II), le produit brut est séparé, à partir de la solution réactionnelle, de l'arylesterdiamide d'acide phosphorique et du chlorure d'ammonium, le dosage du dichlorure d'arylester d'acide phosphorique (II), y compris la séparation du produit brut, étant effectué dans les cinq heures.

10. Procédé selon l'une quelconque des revendications 1 à 6, **caractérisé en ce que** la solution de dichlorure d'arylester d'acide phosphorique (II) dans le solvant inerte est dosée dans un solvant inerte saturé en ammoniac, à travers lequel un flux d'ammoniac est conduit simultanément, le flux d'ammoniac étant dimensionné de telle sorte qu'au moins 4 moles d'ammoniac par mole de dichlorure d'arylester d'acide phosphorique (II) traversent le réacteur.

11. Procédé selon l'une quelconque des revendications 6 à 10, **caractérisé en ce que** la solution de dichlorure d'arylester d'acide phosphorique (II) dans le solvant inerte est dosée directement dans l'ammoniac ou la solution d'ammoniac via un tube plongeur.

12. Procédé selon l'une quelconque des revendications 7 à 10, **caractérisé en ce que** la vitesse de dosage de la solution ainsi que la puissance de refroidissement sont choisies de telle sorte que la température interne du réacteur ne dépasse pas 30°C.

13. Procédé selon l'une quelconque des revendications 1 à 12, **caractérisé en ce que** le solvant inerte est récupéré après la réaction du dichlorure d'arylester d'acide phosphorique avec de l'ammoniac et est réutilisé après expulsion de l'ammoniac résiduel dissous sans traitement supplémentaire.

14. Procédé selon l'une quelconque des revendications 1 à 13, dans lequel le solvant inerte est choisi dans le groupe constitué par le toluène, l'heptane, le cyclohexane, le xylène, le trichlorométhane, le chlorobenzène, l'éthylester d'acide acétique et l'ester carbonique, et des mélanges de ceux-ci, de préférence le toluène.
